# EUROPEAN PATENT APPLICATION

(11) **EP 2 455 334 A1**
(43) Date of publication of application: **23.05.2012**
(21) Application number: 10382304.3
(22) Date of filing: 18.11.2010
(51) Int. Cl.: C01B 3/32, C01B 3/48, C01B 3/58, B01J 19/00, H01M 8/06

(54) **Ethanol processing system**

(71) Applicant: Tecnicas Reunidas, S.A., 28015 Madrid (ES)
(72) Inventor: CAUBILLA ANGULO, Juan Manuel, E-28015, Madrid (ES); GONZÁLEZ BAÑUELOS, Rosa María, E-28015, Madrid (ES)
(74) Representative: ABG Patentes, S.L.

(57) **Abstract**

The present invention relates to an ethanol processing system for generating a hydrogen gas-rich reformed gas stream characterized by comprising an integrated reformer which in turn comprises (a) an adiabatic pre-reformer in which the ethanol is catalytically transformed into methane, hydrogen, carbon monoxide and carbon dioxide and (b) an isothermal reformer in which the methane contained in the pre-reformed gas stream obtained in the pre-reformer is catalytically converted into hydrogen; and a catalytic combustor providing the thermal energy required by the reformer. Likewise, the invention relates to a process for reforming ethanol which uses said ethanol processing system, as well as to the integration of said processing system with a fuel cell system, both integrated in an energy generating system capable of propelling a motor vehicle.

## Description

### Field of the Invention

The present invention is comprised within the devices which produce a hydrogen-rich stream intended to feed a fuel cell system, wherein water and ethanol are used as reagents for generating said stream.

### Background of the Invention

Fuel cell systems are being developed as a very advantageous alternative over other forms of power generation in terms of efficiency and the reduction of pollutant emission. Fuel cells typically provide electricity from oxidation-reduction chemical reactions, using hydrogen as fuel and oxygen as an oxidizing agent.

A significant drawback which reduces the more widespread use of fuel cells is the lack of a hydrogen distribution infrastructure. Hydrogen has a relatively low volumetric energy density and is more difficult to store and transport than the hydrocarbon fuels conventionally used in most power generating systems. A way to overcome this difficulty is the use of reforming units which convert the hydrocarbons into a hydrogen-rich gas stream which can be used as a feed for the fuel cells.

There are a number of documents in the state of the art which describe devices capable of producing a hydrogen-rich stream for feeding a fuel cell system, using a mixture of water and a hydrocarbon, such as ethanol, as starting reagents in the reforming process.

Said devices generally comprise an evaporator, a catalytic reformer wherein ethanol is converted into hydrogen, carbon dioxide, carbon monoxide and water, and at least one combustor for heating the reformer. Systems of this type are used in motor vehicles propelled by fuel cells to provide hydrogen as a fuel for said cells, without needing to transport hydrogen, either in liquid and/or gaseous form, on board.

Additionally, and depending on the quality of the process gas required by the fuel cell system, these systems incorporate a carbon monoxide purification or reduction unit given that this compound very negatively affects the correct operation of the fuel cell, in particular, it poisons the anode thereof. Said purification process generally involves a combination of stages such as the water-gas shift at high temperature, water-gas shift at low temperature, selective oxidation of CO or selective methanation of CO. Alternative processes include reactors and filters with hydrogen-selective membranes.

Unites States application US2003/0022950 describes a device for producing hydrogen intended to feed a fuel cell including an evaporator which evaporates the fuel, a heater for superheating the vapor produced, a high temperature reformer for reforming the superheated vapor, a combustor which provides the thermal energy required for the reforming by means of the combustion of a gas containing fuel and oxygen, a water-gas shift reactor for reducing the content of CO and a cooling system which reduces the temperature of the outlet reformate stream before entering the water-gas shift reactor.

The documents which refer to devices particularly aimed at reforming ethanol as a fuel include, for example, the international application WO01/00320 which describes a method for reforming ethanol and its incorporation into a fuel cell system intended for the propulsion of a vehicle. In particular, it mentions a system including: a hydrogen production unit for producing hydrogen by reforming ethanol; a CO reduction unit; a fuel cell and a combustion unit for the methane and hydrogen not consumed by the cell, in addition to a series of heat exchangers which manage and use the heat generated in different reactions.

European application EP1808327 describes a method for obtaining electric energy from fuel cells fed with hydrogen obtained by means of the catalytic reforming of ethanol as well as its application in any type of vehicle. Said method comprises a first reforming stage including the dilution of the ethanol with water from the fuel cell, its introduction into a compartment for its preheating and its subsequent vaporization. The vaporized mixture is subsequently injected into the reformer that is in a metal or ceramic cylinder containing the catalyst. The second stage involves the purification of the hydrogen from the reforming for the purpose of removing the CO by means of using reactors which incorporate selective hydrogen permeation membranes on their outer wall. The waste gases are collected in a fume device to recover the heat necessary for the full vaporization of the mixture of gases entering the reformer.

There are also other documents such as US2007/0122667, WO99/61369 and WO02/45839 which incorporate auto thermal reformers in which the energy required for the reforming stage comes from the joint supply of oxygen (air) together with the ethanol-water mixture on a catalyst suitable for a part of the ethanol to be oxidized to CO₂ and water (which is referred to as partial oxidation). Nevertheless, these systems are not suitable for their incorporation into air-independent propulsion systems due to the fact in most cases they require the presence of air to provide the oxygen necessary for performing the partial oxidation reaction.

A drawback derived from the direct reforming of ethanol carried out with the different devices mentioned is the gradual generation of coke deposits which finally cause the deactivation of the catalytic systems present in the reformer. Therefore, the development of an ethanol processing system which considerably prevents or reduces this drawback is necessary.

In addition, due to the design and arrangement of the different components configuring the ethanol processing systems described in the state of the art, most of them are not suitable for their incorporation into vehicles with a restricted spatial requirement, therefore it is also desirable for said processing system to incorporate compact and integrable as well as safe components or reactors which allow maximally reducing the total volume of the system.

### Brief Description of the Invention

The authors of the present invention have found that an ethanol processing system which allows performing the reforming process in two stages (pre-reforming and reforming) considerably favors the cracking of ethanol, furthermore preventing the formation of coke deposits and, consequently, the deactivation of the catalytic systems.

A reformed stream with concentrations of up to 45% (humid base) of hydrogen is stably generated by means of using the processor of the invention, and after the achievement of the reforming stage.

Thus, in a first aspect the present invention is aimed at an ethanol processing system for generating a hydrogen gas-rich reformed gas stream which comprises:
- an integrated reformer comprising:
   a) an adiabatic pre-reformer (or pre-reforming reactor) in which the ethanol is catalytically transformed into methane, hydrogen, carbon monoxide and carbon dioxide; and
   b) at least one isothermal reformer or (reforming reactor) in which the methane contained in the pre-reformed gas stream obtained in the pre-reformer is catalytically converted into hydrogen;
- at least one catalytic combustor (or combustion reactor) providing the thermal energy required by the reformer.

In a preferred embodiment, the different reactors forming the ethanol processing system of the invention are microreactors, which allows considerably reducing the size of conventional reforming systems. Said microreactors are compacts, resistant to collisions and vibrations, adaptable to transport means, and integrable to the energy demands in remote or difficult-to-access locations.

In a preferred embodiment, the ethanol processing system comprises three subunits:
(1) a reforming subunit comprising:
   (a) an integrated reformer comprising:
      - an adiabatic pre-reformer in which the ethanol is catalytically transformed into methane, hydrogen, carbon monoxide and carbon dioxide; and
      - at least one isothermal reformer unit in which the methane contained in the pre-reformed gas stream obtained in the pre-reformer is catalytically converted into hydrogen;
   (b) at least one catalytic combustor providing the thermal energy required by the reformer;
(2) a carbon monoxide reduction subunit comprising:
   (a) at least one reactor wherein a gas-water shift reaction (referred to as WGS reactor) is carried out in presence of a catalyst; and
      at least one reactor from;
      (b1) at least one reactor wherein a preferential oxidation reaction (referred to as COPROx reactor) is carried out in the presence of a catalyst; and
      (b2) a selective carbon monoxide methanation reactor for the selective methanation of carbon monoxide in the presence of a catalyst,
(3) a fume subunit comprising:
   (a) a refining combustor wherein the combustion of the fumes from the reforming is ended.
wherein said subunits are in the form of cartridges integrated in said bioethanol processing system.

In an additional aspect, the invention is aimed at a method for reforming ethanol comprising:
- a pre-reforming stage in which the ethanol is catalytically transformed into methane, hydrogen, carbon monoxide and carbon dioxide;
- a subsequent reforming stage in which methane contained in the pre-reformed gas stream obtained in the pre-reforming stage is catalytically converted into hydrogen.
wherein said stages are carried out by using an ethanol reforming system as defined above.

In another aspect, the invention is aimed at an electric energy generating system comprising a fuel cell and an ethanol processing system as defined above.

Additionally, the invention is aimed at a motor vehicle propelled by an electric energy generating system comprising a fuel cell and an ethanol processing system as defined above.

### Brief Description of the Drawings

Figure 1 shows a microreactor of microchannels.
Figure 2 shows a metal monolith.
Figure 3 shows a process diagram of the ethanol processing system.
Figure 4 shows the arrangement of cartridges in the ethanol processing system.
Figure 5 is a diagram showing a process water and ethanol feeding system.
Figure 6 is a diagram showing a reforming and combustion system.
Figure 7 is a diagram showing a refining system.

### Detailed Description of the Invention

The ethanol processing system object of the present invention is designed to carry out the reforming of ethanol more effectively, and thus generate a hydrogen-rich reformed gas stream. The particular design of this system favors the cracking of ethanol since it incorporates a pre-reformer causing the rupture of ethanol into methane (which is easier to reform), and also prevents the formation of coke deposits on the catalytic support which would cause its deactivation thereof in a short period of time.

The ethanol processing system includes an integrated reformer, the latter being understood as a piece of equipment which combines: (a) an adiabatic pre-reformer (or pre-reforming reactor) wherein the ethanol is catalytically transformed into methane (CH₄), hydrogen (H₂), carbon monoxide (CO) and carbon dioxide (CO₂) ; and (b) an isothermal reformer (or reforming reactor) wherein the methane contained in the pre-reformed stream is catalytically converted into hydrogen (H₂).

The reactions which take place in the pre-reforming area are the following:

CH₃CH₂O → CH₄ + CO + H₂

CH₃CH₂OH + 3H₂O → 6H₂ + 2CO₂

CO + H₂O - CO₂ + H₂

CO + 3H₂ → CH₄ + 2H₂O

The outlet stream of the pre-reformer is then fed to the reformer wherein the transformation of the methane generated in the previous stage into hydrogen takes place by means of a catalytic reforming reaction with the water vapor present in the process stream itself. The reactions occurring in this stage are the following:

CH₄ + H₂O → CO + 3H₂

CO + H₂O → CO₂ + H₂

In a particular embodiment, the integrated reformer comprises two reformers installed in parallel such that the process gas from the pre-reformer is identically distributed between both reformers.

The reforming process is endothermic and therefore requires the supply of heat. The heat demanded by these reactions is generated by a catalytic combustor (or combustion reactor) which generates sufficient heat to carry out the reforming reaction in optimal conditions. The choice of a catalytic combustor is due to the fact that it involves a smaller volume and requires a lower oxygen excess, thus preventing a conventional flame combustion which can entail safety problems. It furthermore enables a better heat transfer and produces a smaller amount of unburned substances.

The combustion reactions which take place in the combustor or combustion reactor are the following:

CH₄ + 2O₂ → CO₂ + 2H₂O

2H₂ + O₂ → 2H₂O

CO + ½ O₂ → CO₂

The combustor directly exchanges the heat generated in these exothermic reactions with the reforming reactor. The combustion is controlled by the temperature in the reformer according to the amount of combustion agent introduced therein.

In a particular embodiment, when the integrated reformer comprises two reformers in parallel, the ethanol processing system then comprises two catalytic combustors which directly exchange heat with said reformers or reforming reactors.

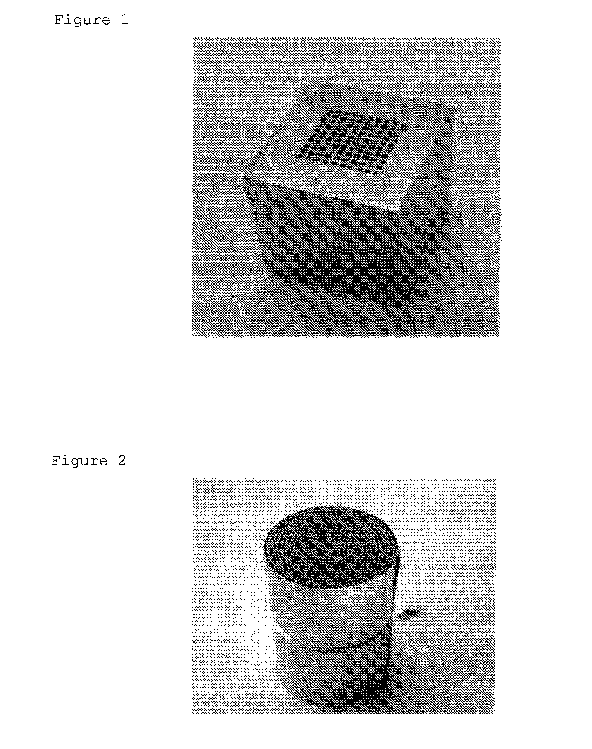

In a preferred aspect, the different reactors forming the ethanol processing system of the invention are microreactors. The term "microreactor" is understood as a metal structure, preferably manufactured with a iron and chromium alloy (such as Fecralloy® for example) and stainless steel, longitudinally traversed by micrometric channels, wherein the walls of said channels are coated or impregnated with catalyst (Figure 1). The arrangement of channels enables the crossing of different streams or simultaneity of independent reaction mechanisms.

In turn, the catalytic systems used in the different reactors configuring the processing system of the invention are active and stable for the reaction mechanisms defined above.

In a particular embodiment, catalysts formulated with noble metals of the platinum family are used, which catalysts are manufactured in a suspended form to be able to be homogeneously deposited on a metal substrate on which an inorganic oxide (alumina or the like) acting as an anchor of the catalyst has previously been deposited. Said catalysts can be commercially acquired.

The formulated catalysts are preferably deposited in metal and/or ceramic monoliths of microchannels. The metal monoliths are preferably manufactured with the same material as the microreactors, i.e., with an iron and chromium alloy (such as Fecralloy® for example) and (austenitic and/or martensitic) stainless steel given that these materials offer the best compromise of properties: heat transmission, use temperature and price.

To prepare the monoliths, flat and wavy metal sheets are alternately arranged, and rolled by corrugation (Figure 2) or prepared by means of extrusion.

In another more preferred embodiment, the formulated catalysts are deposited on the walls of the microreactors mentioned above.

The catalyst is deposited by immersing the metal monolith and/or microreactor in a suspension containing the catalyst, a process which is commonly referred to as washcoating. Once the suspension is adjusted, the main characteristics of the catalytic system such as adhered load, homogeneity and adhesion are optimized.

These catalytic systems allow carrying out the pre-reforming and reforming reactions completely converting the ethanol without the significant formation of secondary compounds and/or coke at 425°C (optimal temperature). Likewise, said catalysts allow obtaining at 700°C conversions greater than 95% for the methane in the combustion reaction.

As a step prior to the entrance in the pre-reformer, the process reagents (ethanol and water) which are stored in their respective containers, are pumped in liquid state to one or more evaporators wherein they are preheated and evaporated. In a particular embodiment, the ethanol and the water are independently heated and evaporated using separate preheaters and evaporators. Both reagents are subsequently introduced in a superheater wherein they are mixed in the suitable doses and superheated to the operating temperature of the pre-reformer. As an alternative, the process reagents can be pre-mixed in liquid state and subsequently evaporated and superheated together.

Therefore, in a particular embodiment, the ethanol processing system comprises at least one evaporator for evaporating the process ethanol; at least one evaporator for vaporizing the process water; and a superheater wherein the ethanol and the water are mixed and superheated as a step prior to the entrance in the pre-reformer. Preferably, the processing system further comprises preheaters for heating the process water.

The ethanol and the water are heated and evaporated by means of the heat supplied by the process gases and/or fumes as will be detailed below.

The ethanol used as a process reagent in the reforming reaction can be chemically synthesized ethanol, ethanol obtained from the fermentation of sugars, or bioethanol, the latter being understood as the ethanol obtained from processing biological matter or biomass.

In a preferred embodiment of the invention, bioethanol from the alcoholic fermentation of sugars and/or cellulose components present in biomass is used. Plants from forest and/or agricultural energy crops, agricultural crop residues, silvicultural treatment residues, forest industry residues, food and agriculture industry residues or livestock farming residues can be used as a source of biomass. The production of ethanol from biomass, or bioethanol, is well known and carried out on a large scale.

As has been mentioned above, the ethanol processing system of the invention generates a hydrogen-rich reforming gas stream, nevertheless, said reformed stream contains significant amounts of carbon monoxide (about 8-12%) as an undesirable byproduct.

In a preferred embodiment, the ethanol processing system is incorporated in an electric energy generating system which also integrates a fuel cell, for which it is necessary to reduce the concentration of said carbon monoxide below 20 ppm, given that the catalyst of the anode of the fuel cell system has a very low tolerance to this compound. To achieve this reduction of the content of carbon monoxide with a minimum hydrogen loss, the system of the invention further incorporates, in a particular embodiment, a refining or purification system comprising a train of adiabatic refining reactors arranged in series which comprises:
**(a)** at least one reactor wherein a gas-water shift reaction is carried out (hereinafter referred to as WGS reactor) in the presence of a catalyst; and
   at least one from;
(b1) at least one reactor wherein a preferential oxidation reaction (hereinafter COPROx reactor) of carbon monoxide is carried out in the presence of a catalyst; and
(b2) a selective carbon monoxide methanation reactor for the selective methanation of carbon monoxide in the presence of a catalyst.

In the WGS reactor, the carbon monoxide contained in the reformed stream reacts catalytically with the water vapor contained in the reforming stream itself to form carbon dioxide and hydrogen through the following reaction:

CO + H₂O → CO₂ + H₂

The concentration of carbon monoxide is thus reduced to about 0.5% by volume (dry base). It is a very favorable reaction for the global process given that, at the same time that the concentration of carbon monoxide in the reforming gas is reduced, hydrogen is also produced. It is an exothermic reaction so it is favored at low temperatures.

To that effect, a catalyst selective for the WGS reaction with conversions close to 90% of CO in the reforming gas is used. For example, a catalyst with an approximate composition of 4% (mass) in metal(s) of the platinum family is formulated.

In a particular embodiment, two WGS reactors arranged in series which allow reducing the content of carbon monoxide to a concentration of approximately 0.21% by volume (dry base) are used.

The concentration of carbon monoxide at the outlet of the WGS reactor is not low enough to be sent to the fuel cell system. To continue further reducing the content of carbon monoxide, in a particular embodiment there is a COPROx reactor the operation of which is based on the selective oxidation of carbon monoxide with oxygen according to the following reaction:

CO + ½ O₂ → CO₂

Said reactor consists of several catalytic beds in which intermediate oxygen injections or atomizations are performed to favor the selectivity towards CO and not towards H₂.

To that end, a catalyst is formulated which is very active in the conversion of CO (close to 90%) at 150°C, three times the stoichiometric amount of O₂ being fed. For example, for the achievement of the COPROx reaction a catalyst with an approximate composition of 5% (mass) in metal(s) of the platinum family is formulated.

In a preferred embodiment of the invention, and for the purpose of improving the efficiency of the process, at least two COPROx reactors arranged in series with intermediate cooling are used to prevent, as much as possible, the destruction of hydrogen.

CO + 3H₂ → CH₄ + H₂O

To carry out this reaction, a catalyst which is highly selective for the methanation of CO is used, maximally preventing hydrogen losses due to secondary reactions such as the methanation of CO₂ or the reverse WGS reaction (RWGS). A catalyst with an approximate composition of 1% (mass) in metal(s) of the platinum family is thus formulated.

Likewise, under stricter quality demands for the reforming gas fed to the fuel cell system, a combination of a COPROx reactor as defined above and a selective carbon monoxide methanation reactor as defined above can be used.

Therefore, in particular embodiments and depending on the quality of the reforming gas required by the fuel cell system, the refining or purification system can comprise the following combinations:
**(b)** at least one WGS reactor, at least one COPROx reactor and a selective carbon monoxide methanation reactor;
**(c)** at least one WGS reactor and at least one COPROx reactor; or
**(d)** at least one WGS reactor and a selective carbon monoxide methanation reactor.

Nevertheless, in a preferred embodiment of the invention, the refining system comprises:
(1) at least one WGS reactor wherein a gas-water shift reaction is carried out in the presence of a catalyst;
(2) at least one COPROx reactor wherein a preferential oxidation reaction of carbon monoxide is carried out in the presence of a catalyst; and
(3) optionally a selective carbon monoxide methanation reactor for the selective methanation of carbon monoxide in the presence of a catalyst.

The COPROx and/or methanation catalytic refining configuration can be substituted by industrial physicochemical alternatives such as systems of selective flow through hydrogen-selective palladium membranes or pressure swing adsorption (PSA) systems. Therefore, in particular embodiments, the refining system can comprise:
(1) at least one WGS reactor and
   one from:
(2.1) a system of selective flow through hydrogen-selective membranes; and
(2.2) a pressure swing adsorption system (PSA).

The outlet stream of the purification system thus has a suitable quality for feeding fuel cell systems, particularly fuel cells of the open anode proton exchange membrane type.

The ethanol processing system can further comprise a heat recovery system for optimizing the energy efficiency of the global process. The heat released in some stages of the process is thus recovered, using it in others wherein the supply of heat is necessary, therefore the heat exchange is performed directly between the process fluids themselves. The ethanol processing system is therefore thermally self-sufficient, producing the vapor necessary for the process and self-managing its condensates. Only the thermal excess is removed by means of heat exchange with any type of cooling fluid.

Thermal oil, such as for example Terminol® or the like, given that it is stable up to 400°C (in operation) and does not wear the equipment or the networks of pipes, or cooling water which can be mixed with glycol to be able to work with low outlet temperatures of the water, can be used as a heat exchange fluid.

Thus, in a particular embodiment, the heat recovery system comprises a first heat exchanger located at the outlet of the reformer, which allows reducing the temperature of the reformed gas to conditions suitable for being able to be treated in the carbon monoxide refining or purification system. Said first exchanger reduces the temperature of the reformed gas by means of heat transfer with the process water (the water which is vaporized in the stage prior to the pre-reforming). In this case, the temperature at the outlet of the heat exchanger is fixed by a constant set point. To that end, a thermostatic valve directly regulates the entrance of water with said temperature.

The heat recovery system can further comprise a second heat exchanger located at the outlet of the WGS reactor which allows reducing the temperature of the process gas to conditions suitable for being able to be treated in the COPROx reactor or in the methanation reactor. Said second exchanger reduces the temperature of the reformed gas by means of heat transfer with the ethanol which is vaporized in the stage prior to the pre-reforming.

In a particular embodiment, when the refining system comprises a WGS reactor, a COPROx reactor and, optionally a methanation reactor, the heat recovery system can further include a third heat exchanger at the outlet of the COPROx reactor for the purpose of adjusting the temperature of the process gas to the temperature required by the methanation reactor (in the event that the latter is present) or by the receiving system downstream of the ethanol processing system. Said third heat exchanger cools the process gas from the COPROx reactor preheating the process water.

Preferably, when two or more WGS reactors arranged in series are used, the heat recovery system further includes intermediate coolers or heat exchangers located between said reactors which allow cooling the gas therefrom preheating and/or evaporating process ethanol and/or water.

Preferably, when two or more COPROx reactors arranged in series are used, the heat recovery system further includes intermediate coolers or heat exchangers located between said reactors which allow cooling the gas therefrom preheating and/or evaporating process ethanol and/or water.

The heat recovery system can further comprise a fourth heat exchanger or evaporator vaporizing the ethanol and a fifth heat exchanger or evaporator vaporizing the process water (mentioned above and used in the stage prior to the pre-reforming) by means of cooling the fumes from the combustion of waste of the fuel cell system.

This heat recovery system ends with the adjustment of the temperature of the reformed gas to the conditions required by the fuel cell system by means of heat transfer with at least one cooler with a cooling fluid, such as glycolated water for example. The consequence of this cooling is the condensation of the water contained in the reformed gas until the saturation point, this water being recovered for its reuse in the reforming process.

In a particular embodiment, the processing system further comprises a refining combustor wherein the combustion of the fumes from the reforming is ended by means of the following reactions:

CH₄ + 2O₂ → CO₂ + 2H₂O

2H₂ + O₂ → 2H₂O

CO + ½O₂ → CO₂

In a preferred embodiment, the ethanol processing system described above can be configured in compact subunits or cartridges according to the operation and/or application therefore, for the purpose of maximally reducing the total volume of the system and defining a compact and integrable system.

The configuration of cartridges allows confining the reactors and the rest of the main pieces of equipment in a joint block, which enables minimizing any possible generation of chemical and/or thermal leakages, and prevents the layout of a complex network of pipes complicating the assembly/disassembly and maintenance operations.

This configuration allows minimizing the number of flanges and/or connections between cartridges and pieces of equipment. The system of cartridges can furthermore be understood as a double envelopment or enclosure representing an additional protection against any collision and/or vibration.

Due to these features, the compact and secure configuration in the form of detachable cartridges in an independent manner, it is particularly suitable for the integration of the ethanol processing system of the invention in transport means with a limited spatial requirement, such as a submarine for example.

Thus, in an additional aspect, the present invention is aimed at an ethanol processing system comprising three subunits:
(1) a reforming subunit comprising:
   (a) an integrated reformer comprising:
      - an adiabatic pre-reformer in which the ethanol is catalytically transformed into methane, hydrogen, carbon monoxide and carbon dioxide; and
      - at least one isothermal reformer in which the methane contained in the pre-reformed gas stream obtained in the pre-reformer is catalytically converted into hydrogen;
   (b) at least one catalytic combustor providing the heat energy required by the reformer;
(2) a carbon monoxide reduction subunit comprising:
   (a) at least one reactor wherein a gas-water shift reaction is carried out (referred to as WGS reactor) in the presence of a catalyst; and
   at least one from:
   (b1) at least one reactor wherein a preferential oxidation reaction is carried out (referred to as COPROx reactor) in the presence of a catalyst;
   (b2) a selective carbon monoxide methanation reactor for the selective methanation of carbon monoxide in the presence of a catalyst,
(3) a fume subunit comprising:
   (a) a refining combustor wherein the combustion of fumes from the reforming is ended;

Preferably, the reforming subunit further comprises a heat exchanger located at the outlet of the reformer which allows reducing the temperature of the reformed gas to conditions suitable for being able to be treated in the carbon monoxide reduction subunit.

Also preferably, the carbon monoxide reduction subunit further comprises a heat exchanger located at the outlet of the WGS reactor which allows reducing the temperature of the process gas to conditions suitable for being able to treated in the COPROx reactor or in the methanation reactor.

Also preferably, when the carbon monoxide reduction subunit comprises at least one COPROx reactor, said subunit can comprise a heat exchanger located at the outlet of said COPROx reactor for the purpose of adjusting the temperature of the process gas to the temperature required by the fuel cell system or by the methanation reactor.

Likewise, preferably, the fume subunit further comprises:
- an evaporator or heat exchanger vaporizing the ethanol by means of cooling the fumes from the combustion of waste of the fuel cell system;
- an evaporator or heat exchanger vaporizing the process water by means of cooling the fumes from the combustion of waste of the fuel cell system; and
- a superheater wherein the ethanol and the water are mixed and superheated as a step prior to the entrance in the pre-reformer.

Said heat exchangers and evaporators form the heat recovery system of the ethanol processing system configured in subunits.

In a particular embodiment, the integrated reformer of the reforming subunit comprises two reformers installed in parallel such that the process gas from the pre-reformer is identically distributed between both processors. In said particular embodiment, the reforming subunit further comprises two catalytic combustors which exchange heat directly with said reformers.

In another particular embodiment, the carbon monoxide reduction subunit comprises two WGS reactors arranged in series and an additional heat exchanger located between both WGS reactors which cools the gas from the first WGS reactor.

In another particular embodiment, the carbon monoxide reduction subunit comprises two or more COPROx reactors arranged in series, in addition to intermediate heat exchangers located between said reactors which allow cooling the gas therefrom.

In a preferred aspect, the different reactors forming the ethanol processing system are microreactors such as those described above.

In an additional aspect, the present invention is aimed at a method for reforming ethanol which comprises:
- a pre-reforming stage in which the ethanol is catalytically transformed into methane, hydrogen, carbon monoxide and carbon dioxide;
- a subsequent reforming stage in which the methane contained in the pre-reformed gas stream obtained in the pre-reforming stage is catalytically converted into hydrogen, wherein said stages are carried out using an ethanol reforming system as defined above.

The method for reforming bioethanol to produce a hydrogen-rich stream takes place in two main stages: the first stage is the pre-reforming stage in which, as has been explained above, the ethanol is catalytically transformed in the adiabatic pre-reformer, forming mainly methane and hydrogen. The second stage is the reforming stage, in which the methane contained in the pre-reformed stream is catalytically converted into hydrogen in the isothermal reformer.

To feed the pre-reformer with the process reagents, the latter can be pumped in liquid state from their respective containers wherein they are stored, to one or more evaporators wherein they are preheated and evaporated. In a particular embodiment, the ethanol and the water are independently heated and evaporated using separate preheaters and evaporators. Both reagents are subsequently introduced in a superheater wherein they are mixed in the suitable doses and superheated to the operating temperature of the pre-reformer. As an alternative, the process reagents can be pre-mixed in liquid state and subsequently evaporated and superheated together.

The heat required in the stages of the method is supplied by catalytic combustor as defined above. The heat generated by combustion is directly exchanged with the reformer. The combustion is controlled by the temperature in the reformer according to the amount of combustion agent introduced therein.

In a preferred embodiment, the reformed stream obtained after the method for reforming ethanol is used, after its subsequent purification, to feed a fuel cell system.

In said embodiment, the combustor is fed with the reject streams from the fuel cell system which, by means of the combustion thereof, provides the heat required for the reforming reactions. Said reject streams travel a countercurrent path with respect to the gas in the reforming process thereof. These are:
- anode reject: this stream is a combustible stream formed by hydrogen and methane, except the part used in the production of electricity in the fuel cell system, and other inert gases;
- cathode reject: this stream is a combustion agent formed mainly by oxygen and water.

The reject stream of the cathode exits the fuel cell system at atmospheric pressure, and to be introduced in a controlled manner in the catalytic combustion stage it is desirable to increase its pressure. To that end, a compressor is used which raises the pressure to the pressure required by the process. Screw or claw lobe rotary type compressors, which are robust and energetically efficient, can be used for such purpose.

In this embodiment, the combustor is furthermore capable of burning different streams according to the operation phase. For example, in steady-state or normal operation, the thermal energy generated mainly comes from the combustion of the anode (fuel) reject stream and the cathode (combustion agent) reject stream of the fuel cell to reach a suitable temperature in the reforming area, according to demand, assuring the correct conditions on the catalytic reforming reaction side, thus allowing the maximization of hydrogen production. Additionally, it is usually necessary to supply an additional amount of oxygen.

The additional oxygen used as a combustion agent, as well as the oxygen required by the fuel cell, can come from an oxygen storing tank, thus not requiring the supply of air from the exterior, so said system can be incorporated into an air-independent propulsion system.

In turn, during the start, hot fumes from the starting system pass through the combustor, preheating the system and generating heat for vaporizing the reagents necessary in the first phases of the start. An ethanol pre-reformer coupled to a catalytic combustor capable of burning ethanol with oxygen can be used as a starting system.

In the case of minimum operation of the ethanol processing system, which coincides with the minimum load state of the system and which corresponds with a reforming has production in an amount sufficient for sending to the cell 25% of the hydrogen in steady state, the reject streams of the fuel cell and part of the reforming gas are burned.

During the reforming reaction, significant amounts of carbon monoxide are produced as a byproduct. The fuel cell system requires the content of said compound in the feed of the cell to be less than 20 ppm, so for this application it is necessary to incorporate additional purification stages which allow reducing the content of carbon monoxide to minimum concentrations acceptable by the anode of the fuel cell.

In this case, the method for reforming ethanol further comprises a purification or reduction process of the concentration of carbon monoxide which in turn comprises:
- a gas-water shift reaction (hereinafter referred to as WGS reaction) performed in the WGS reactor, in which part of the carbon monoxide contained in the reformed stream reacts catalytically with the water contained in the same stream, forming carbon dioxide and hydrogen;
   and at least one reaction from:
- a preferential oxidation reaction of carbon monoxide with oxygen performed in the COPROx reactor,; and
- a selective methanation reaction of carbon monoxide in the presence of a catalyst, when the fuel cell system requires a strict quality of the process gas.

The WGS reaction is performed in the WGS reactor described above. To that end, the reforming gas stream from the reformer is previously passed through the first heat exchanger located at the outlet of the reformer for the purpose of reaching the optimal WGS reaction temperature. Said first heat exchanger cools the reforming gas stream by means of heat transfer, evaporating process water as described above. In this case, the temperature at the outlet of the heat exchanger is fixed by a constant set point. To that end, a thermostatic valve directly regulates the entrance of water with said temperature.

The WGS reaction is a very favorable reaction for the global process given that, at the same time that the concentration of carbon monoxide in the reforming gas is reduced, hydrogen is also produced. It is an exothermic reaction so it is favored at low temperatures.

For the purpose of compensating for the temperature increase occurring in the WGS reactor due to the exothermic reaction produced, the process gas is cooled in the second exchanger located at the outlet of the WGS reactor, which allows reducing the temperature of the process gas to conditions suitable for being able to be treated in the COPROx preferential oxidation reaction or in selective methanation reaction. Said second exchanger reduces the temperature of the reformed gas by means of heat transfer with the ethanol which is vaporized in the stage prior to the pre-reforming.

The WGS reaction stage is preferably performed using two WGS reactors arranged in series. In this case, to compensate for the temperature increase occurring in the first reactor, the process gas is cooled in an intermediate heat exchanger before being introduced in the second reactor. Said heat exchanger located between both reactors cools the gas from the first reactor preheating the process water.

The concentration of carbon monoxide at the outlet of the WGS reactor is not low enough to be sent to the fuel cell system. To continue further reducing the content of carbon monoxide, a selective oxidation reaction of carbon monoxide with oxygen is carried out to provide carbon dioxide. This reaction requires the intermediate injection or atomization of oxygen to favor the selectivity towards CO and not towards H₂.

Preferably, to perform this preferential oxidation stage:
- a catalyst which is highly selective for the oxidation of carbon monoxide is used for the purpose of preventing as much as possible the oxidation of hydrogen to form water;
- a rigorous control of the temperature is carried out given that work must be done at a temperature favoring this reaction to the detriment the formation of water;
- a precise metering of oxygen is carried out to reduce as much as possible the oxidation of hydrogen.

Also in this case, the oxygen required in the selective oxidation reaction can come from an oxygen storing tank.

For the purpose of adjusting the temperature of the process gas to the temperature required by the methanation reactor or by the receiving system thereof downstream of the ethanol processing system, said process gas is passed through the third heat exchanger located at the outlet of said COPROx reactor. Said third exchanger cools the process gas coming from the COPROx reactor by preheating the process water.

The selective oxidation reaction stage is preferably performed using two or more COPROx reactors arranged in series, more preferably three COPROx reactors arranged in series, in which case, and to compensate for the temperature increase occurring in the different reactors, the process gas is cooled in intermediate coolers or heat exchangers located between said reactors which allow cooling the gas therefrom preheating the process water.

Alternatively, to reduce the content of carbon monoxide of the stream from the WGS reaction, a selective methanation reaction of carbon monoxide is carried out.

The outlet stream after the purification process thus has a suitable quality for being integrated and fed to fuel cell systems, particularly to fuel cells of the open anode proton exchange membrane type.

Nevertheless, in a particular embodiment and under stricter quality demands for the reforming gas fed to the fuel cell system, a combination of a selective oxidation reaction of carbon monoxide with oxygen and subsequently, a selective methanation reaction of carbon monoxide can be used.

By means of the described method, the heat released in some stages of the process (reforming, WGS and COPROx) is recovered by using it in others wherein the supply of heat is necessary (evaporation of the starting water and ethanol). The heat exchange is performed directly between the process fluids themselves. Furthermore, the reject streams from the fuel cell system are reused which, by means of their catalytic combustion, supply the heat necessary for producing the chemical ethanol reforming reactions.

Thus, the ethanol used as a starting reagent is evaporated in the heat exchangers distributed over the different areas of the system by means of the heat supplied by the cooling of the process gas entering the COPROx preferential oxidation reactor, as well as by the cooling of the fumes from the combustion of waste of the fuel cell system.

In turn, the water used as a starting reagent is evaporated in the heat exchangers distributed over the different areas of the system by means of heat transfer with the hot process gas exiting the reformers, as well as by the cooling of the fumes from the combustion of waste of the fuel cell system, and it is preheated by means of heat transfer with the process gas exiting the COPROx reactor, as well as, where appropriate, with the process gas exiting the intermediate heat exchangers located between the WGS and COPROx reactors.

Finally, the system ends the adjustment of the temperature of the reformed gas to the conditions required by the fuel cell system by means of heat transfer with a cooling fluid, such as glycolated water for example. The consequence of this cooling is the condensation of the water contained in the reformed gas until the saturation point, this water being recovered in a condensate separating tank for its reuse in the reforming process.

The unburned fumes and fuels from the catalytic combustor are preferably removed in a safe and controlled manner. For such purpose, a refining combustor is used wherein the combustion of these gases is ended by means of the combustion reactions mentioned above.

The still hot fumes from these reactions are preferably cooled by means of heat exchange with a cooling fluid, such as glycolated water for example, which causes the condensation of the water contained therein which is separated and taken to a condensate separating tank for its reuse in the reforming process.

Finally, and preferably, the cold fumes are compressed and aspirated by a fume blower which increases the pressure thereof to the pressure required by the system wherein the CO₂ is removed.

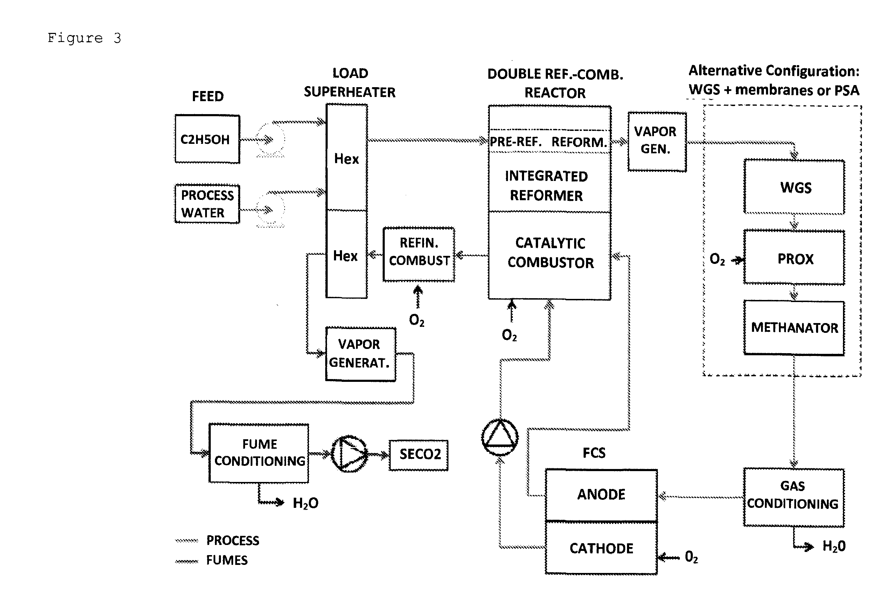

A representative diagram of the global ethanol reforming process is shown in Figure 3.

In an additional aspect, the processing system defined above can be incorporated in any motor vehicle propelled by a fuel cell system. Nevertheless, due to the compactness of the system particularly described and to its design in the form of detachable subunits, as well as due to the possible administration of oxygen from storage tanks, it is particularly suitable for its integration in air-independent propulsion systems, particularly in a submarine.

### Embodiment of the Invention

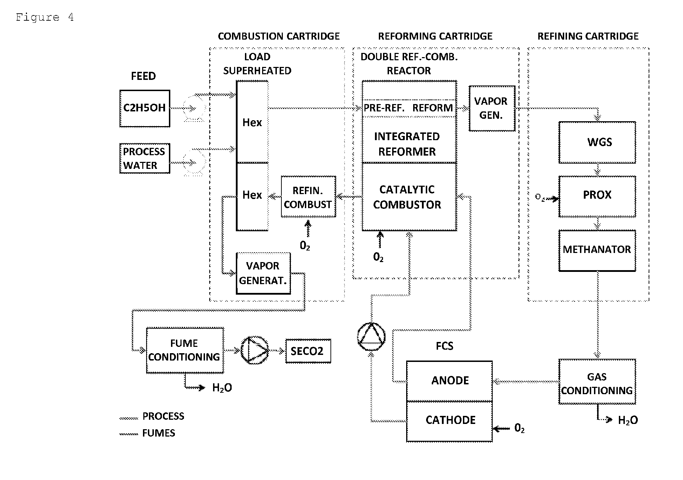

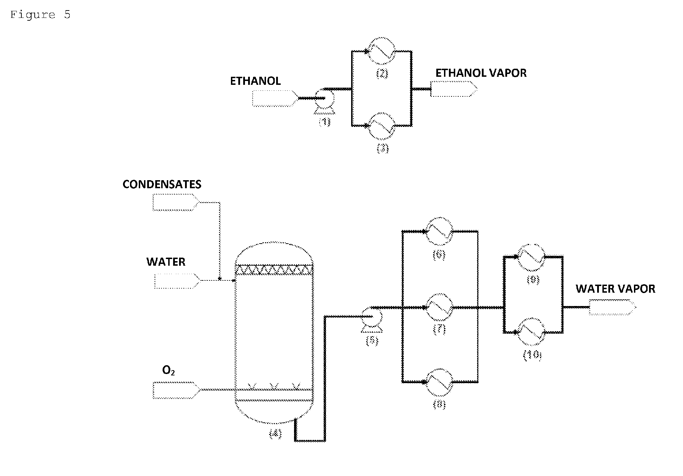

This embodiment describes a method for reforming bioethanol which uses an ethanol processing system configured in compact subunits as defined above and which comprises a double ethanol reformer, two WGS reactors and three COPROx reactors, in addition to a heat recovery and fume removal system, and which is coupled to a fuel cell system (Figure 4).
The process water and ethanol feeding system is shown in Figure 5.

The starting bioethanol in liquid state is pumped by means of a pump (1) to two evaporators (also referred to as heat exchangers) placed in parallel:
- in the first of these heat exchangers (2), the bioethanol is vaporized by means of the heat supplied by the cooling of the process gas entering the first of the COPROx reactors. Said heat exchanger is installed inside the carbon monoxide reduction subunit;
- in the second of the heat exchangers (3), the bioethanol is vaporized by means of the cooling of the fumes from the combustion of waste of the fuel cell system. This evaporator or heat exchanger is included inside the fume subunit.

The bioethanol flow is controlled, according to the needs of the process, by means of a flow recycle after the pump, which allow giving flexibility to the system.

During the starting phase, the bioethanol is pumped to a starter wherein the combustion with oxygen is performed to preheat the different devices of the ethanol processing system.

In turn, the process water is stored in a tank (4). The water from the fuel cell system and the condensed water from the condensate separating tank reaches said tank. In this tank, the dissolved gases which have been trapped in the liquid during the condensation and cooling are furthermore degassed.

The degassing is mainly performed by means of two stages: in the first stage the water is passed through a bed which distributes the water, facilitating the desorption of the dissolved gases and it is ended by means of injecting oxygen into the bottom of the tank. The gases from the injection plus the recovered dissolved gases then traverse a demister to remove the possible liquid droplets entailed during the process.

The degassed process water is pumped by means of a pump (5), initially distributing it to three preheaters. The water flow is controlled by means of a flow recycle which allow giving flexibility to the system.

The water preheaters work in parallel and are:
- a preheater or heat exchanger (6), wherein the water is preheated by means of the heat supplied by the cooling of the process gas entering the second COPROx reactor. This heat exchanger is installed inside the carbon monoxide reduction subunit;
- a second preheater or heat exchanger (7), wherein the water is preheated by means of the heat supplied by the cooling of the process gas entering the third COPROx reactor. This heat exchanger is installed inside the carbon monoxide reduction subunit;
- a third preheater or heat exchanger (8), wherein the water is preheated by means of the heat supplied by the cooling of the process gas exiting the third COPROx reactor. This heat exchanger is installed together with the process gas condenser in a compact piece of equipment.

The preheated water is then mixed and homogenized and distributed as necessary over two evaporators or heat exchangers installed in parallel:
- in the first of these heat exchangers (9), the water is evaporated by means of heat transfer with the hot process gas exiting the reformers. This evaporator or heat exchanger is installed inside the reforming subunit;
- in the second of these heat exchangers (10), the process water is evaporated by means of heat transfer with the fumes from the combustion of waste of the fuel cell system. This evaporator or heat exchanger is included inside the fume subunit.

The process water vapor is sent to the process line to be mixed and superheated with the bioethanol to subsequently take said mixture to the reformer.

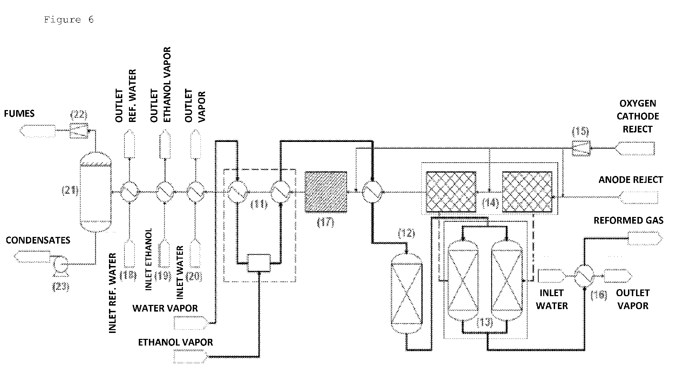

The reforming and combustion system is shown in Figure 6.

The mixture of reagents (ethanol and water) superheated in the superheater (11) located in the fume subunit is introduced in the reforming subunit wherein it is pre-reformed in the pre-reformer (12) and reformed in two reforming reactors (or reformers) (13) located in parallel which are heated by heat transfer with two catalytic combustors (14) which burn the rejects of the fuel cell system in countercurrent with the process line.

The gaseous reagents stream from the superheater is fed in the pre-reformer, catalytically transforming it into a methane- and hydrogen-rich stream.

The process gas from the pre-reformer is identically distributed between the two reformers installed in parallel, wherein it is heated instantaneously using the combustion heat generated in the two catalytic combustors.

The combustion in the catalytic combustors is controlled by the temperature in the reformers according to the amount of combustion agent (oxygen and cathode residue) which is introduced in the combustors through the blower (15).

During the start, hot fumes from the starter are passed through these combustors, preheating the system and generating heat for vaporizing the reagents necessary in the first phases of the start.

In a stage after the start in which the production of reforming gas begins, the reforming gas is burned through two bypasses.

In steady state, the anode and cathode reject streams are mainly burned, although the supply of a small amount of additional oxygen is necessary.

The anode reject from the fuel cell is introduced in the reforming subunit in the first combustion area of each of the combustors in equal parts. The cathode reject is compressed through a blower and is injected in the process area of each combustor by controlling the temperature in the reformers of the process.

To prevent the temperature in the combustors from shooting up, attemperation CO₂ from the fume recycle can be fed in all the operation states.

The reforming stream from both reformers is then sent to the carbon monoxide reduction subunit after adjusting its temperature in a heat exchanger (16). Said heat exchanger is integrated inside the reforming subunit and cools the reforming gas stream by means of heat transfer, evaporating process water as described above.

To achieve reducing the content of carbon monoxide to values less than 20 ppm, a train of reactors in series formed by two WGS reactors and three COPROx reactors is used. These operations are performed in two cartridges, one including the first carbon monoxide reduction (WGS reaction) stage and another one including the preferential oxidation stage.

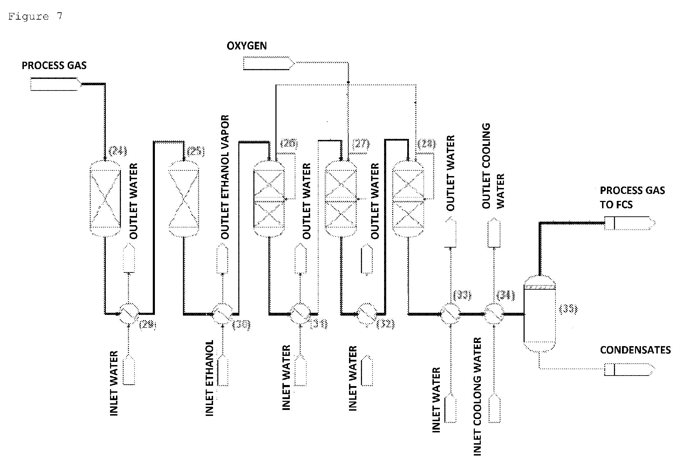

The refining system is shown in Figure 7.

Thus, the cooled reforming gas stream is fed to the first WGS reactor (24), wherein the carbon monoxide reacts catalytically with the water vapor contained in the reforming stream itself to form carbon dioxide and hydrogen.

To compensate for the temperature increase occurring in the first WGS reactor (24), the process gas is cooled in a heat exchanger (29) by means of heat transfer , preheating the process water before being introduced in the second WGS reactor (25) .

In said second WGS reactor (25), a new catalytic reaction of carbon monoxide with the water contained in the process gas is carried out. It is achieved that the content of carbon monoxide in the reformed gas is approximately 0.21% by volume at the outlet of these two reactors.

The hot process gas exiting the second WGS reactor (25) due to the exothermic reaction is cooled in a heat exchanger (30) by means of heat transfer, heating the starting bioethanol.

The two heat exchangers (29, 30) used in the WGS reaction are included in the carbon monoxide reduction subunit.

The concentration of carbon monoxide at the outlet of the WGS reactors is not low enough to be sent to the fuel cell system. To continue further reducing the content of carbon monoxide, there are three reactors in series the operation of which is based on the selective oxidation of carbon monoxide to provide carbon dioxide.

To improve the efficiency of the process, three COPROx reactors in series with intermediate cooling are used to prevent, as much as possible, the destruction of hydrogen.

The outlet stream of the second WGS reactor is fed to the first COPROx reactor (26) after having been cooled. Gaseous oxygen is also fed to said reactor.

The process gas at the outlet of this first COPROx reactor (26) is fed to the second COPROx reactor (27) after having been cooled in a heat exchanger (31) located inside the carbon monoxide reduction subunit. Gaseous oxygen is also fed to said reactor.

Finally, the process gas passes through the last COPROx reactor (28), wherein the composition is refined until the requirement established by the fuel cell system.

The reactors used are reactors with two beds each with intermediate oxygen injections such that the required selectivity towards carbon monoxide and not towards hydrogen is maximally optimized.

The gaseous oxygen which is added in these reactions is from an oxygen storing tank.

The heat exchangers (31, 32) intermediate to the reactors with COPROx technology are installed directly inside the carbon monoxide reduction subunit to limit the technical losses and increase the safety in the process, in addition to the fact that it is necessary due to the compactness required for the fuel cell system.

The exchanger (31) located between the first and second COPROx reactor (26 and 27, respectively) cools the stream exiting the first COPROx reactor (26) to the temperature suitable for the following catalytic stage by means of heat transfer, preheating the process water.

The exchanger (32) located between the second and third COPROx reactor (27 and 28, respectively) cools the stream exiting the second COPROx reactor (27) to the temperature suitable for the following catalytic stage by means of heat transfer, preheating the process water.

Finally, and for the purpose of adjusting the temperature of the process gas to the temperature required by the receiving system thereof (fuel cell system) downstream of the bioethanol processing system, the reformed gas passes through a series of exchangers (33) and condensers (34), wherein its temperature is reduced by condensing water.

Thus, the reformed gas exiting the last COPROx reactor (28) is initially cooled in a heat exchanger (33) by heat transfer, preheating the process water. Finally, the adjustment of the temperature of the reformed gas to the conditions required by the fuel cell system is performed by means of heat transfer with glycolated water as a cooling fluid. The consequence of this cooling is the condensation of part of the water contained in the gas until the saturation point. This water is recovered in a separating tank (35) to be reused in the process. This tank is a vertical tank wherein the liquid contained in the process stream is recovered by gravity. It furthermore has a separating demister, wherein the separation of the liquid droplets which can be entrained by the gas in the circulation is ended.

In turn, the unburned fumes and fuels from the reforming subunit are introduced in the fume subunit wherein the combustion thereof is ended and they are cooled in the heat exchangers (19, 20), transmitting their heat to the process according to the needs of the system.

Thus, said fumes and combustibles are introduced in a refining reactor (17). In said reactor, the combustion agent gases from the residue of the cathode of the fuel cell by means of a blower (15), or the supply oxygen if necessary, are further introduced in a controlled manner to achieve a stoichiometric combustion and to prevent the presence of unburned substances or oxygen in the final fumes. This is achieved by means of a series of high-precision analyzers installed downstream of the fume subunit which regulate the injection of combustion agent therein.

To control the combustion temperature and to prevent it from shooting up, causing hot points which can affect the integrity and correct operation of the combustion reactors, there is an injection of attemperation water in this refining combustor, in the event that the CO₂ attemperation methods of the rest of the combustors are not enough.

The still hot fumes are cooled by means of heat exchange with glycolated water in a heat exchanger (18), which causes the condensation of the water contained in the fumes which is separated in a separating tank (21) by gravity. Due to the fact that the condensates of this tank work at very low pressures, they must be pumped by means of a pump (23) to be reintroduced in the system. Therefore, there is a level control in the tank.

Finally, the cold fumes are compressed by a blower (22) which aspirates the fumes of the combustion system, raising the pressure thereof to the pressure required by the CO₂ removal system. These cold and dry fumes are furthermore partly bypassed to introduce them in the CO₂ combustion attemperation system.

## Claims

1. An ethanol processing system for generating a hydrogen gas-rich reformed gas stream which comprises:
- an integrated reformer comprising:
a) an adiabatic pre-reformer or pre-reforming reactor in which the ethanol is catalytically transformed into methane, hydrogen, carbon monoxide and carbon dioxide; and
b) at least one isothermal reformer or reforming reactor in which the methane contained in the pre-reformed gas stream obtained in the pre-reformer is catalytically converted into hydrogen;
- at least one catalytic combustor providing the thermal energy required by the reformer.

2. The ethanol processing system according to claim 1, wherein the different reactors of said processing system are microreactors.

3. The ethanol processing system according to any of the previous claims, wherein the catalysts included in the pre-reforming, reforming reactors and in the catalytic combustor are platinum-based catalysts homogenously supported on a metal substrate through a layer of inorganic oxide.

4. The ethanol processing system according to claim 3, wherein the formulated catalysts are deposited in metal and/or ceramic monoliths of microchannels or on the walls of the microreactors.

5. The ethanol processing system according to any of the previous claims, wherein the ethanol to be reformed is bioethanol.

6. The ethanol processing system according to any of the previous claims, further comprising a purification system for reducing the carbon monoxide contained in the reformed gas stream which comprises:
(a) at least one WGS reactor wherein a gas-water shift reaction is carried out in the presence of a catalyst; and
at least one from:
(b1) at least one COPROx reactor wherein a preferential oxidation reaction of carbon monoxide is carried out in the presence of a catalyst; and
(b2) a selective carbon monoxide methanation reactor for the selective methanation of carbon monoxide in the presence of a catalyst.

7. The ethanol processing system according to claim 6, wherein the purification system for reducing carbon monoxide comprises:
- at least one WGS reactor wherein a gas-water shift reaction is carried out in the presence of a catalyst;
- at least one COPROx reactor wherein a preferential oxidation reaction of carbon monoxide is carried out in the presence of a catalyst; and
- optionally, a selective carbon monoxide methanation reactor for the selective methanation of carbon monoxide in the presence of a catalyst.

8. The ethanol processing system according to any of the previous claims, further comprising a heat recovery system which comprises:
- a first heat exchanger located at the outlet of the reformer, which allows reducing the temperature of the reformed gas to conditions suitable for being able to be treated in the carbon monoxide purification system;
- a second heat exchanger located at the outlet of the WGS reactor which allows reducing the temperature of the process gas to conditions suitable for being able to be treated in the COPROx reactor or in the methanation reactor;
- a third heat exchanger at the outlet of the COPROx reactor, when it is present, for the purpose of adjusting the temperature of the process gas to the temperature required by the receiving system of the ethanol processing system or by the methanation reactor
- an evaporator or heat exchanger vaporizing the process ethanol;
- an evaporator or heat exchanger vaporizing the process water; and
- a superheater wherein the ethanol and the water are mixed and superheated as a step prior to the entrance in the pre-reformer.

9. The ethanol processing system according to any of the previous claims, further comprising a refining combustor wherein the combustion of the fumes from the reforming gas is ended.

10. An ethanol processing system according to any of claims 1 to 6 and 9, which comprises:
(1) a reforming subunit comprising:
(a) an integrated reformer comprising:
- an adiabatic pre-reformer unit in which the ethanol is catalytically transformed into methane, hydrogen, carbon monoxide and carbon dioxide; and
- at least one isothermal reformer unit in which the methane contained in the preformed gas stream obtained in the pre-reformer is catalytically converted into hydrogen;
(b) at least one catalytic combustor providing the thermal energy required by the reformer;
(2) a carbon monoxide reduction subunit for reducing the carbon monoxide contained in the reformed gas stream which comprises:
(a) at least one WGS reactor wherein a gas-water shift reaction is carried out in the presence of a catalyst; and
at least one from:
(b1) at least one COPROx reactor wherein a preferential oxidation reaction of carbon monoxide is carried out in the presence of a catalyst; and
(b2) a selective carbon monoxide methanation reactor for the selective methanation of carbon monoxide in the presence of a catalyst,
(3) a fume subunit comprising:
(a) a refining combustor wherein the combustion of the fumes from the reforming subunit is ended.
wherein the subunits are in the form of cartridges integrated in said ethanol processing system.

11. An ethanol processing system according to claim 10, wherein:
- the reforming subunit further comprises a heat exchanger located at the outlet of the reformer, which allows reducing the temperature of the reformed gas to conditions suitable for being able to be treated in the carbon monoxide reduction subunit.
- the carbon monoxide reduction subunit further comprises:
(a) a heat exchanger located at the outlet of the WGS reactor which allows reducing the temperature of the process gas to conditions suitable for being able to be treated in the COPROx reactor or in the methanation reactor;
(b) a heat exchanger located at the outlet of the COPROx reactor, when it is present, for the purpose of adjusting the temperature of the process gas to the temperature required by the fuel cell system or by the methanation reactor;
- the fume subunit further comprises:
(a) an evaporator or heat exchanger vaporizing the ethanol by means of cooling the fumes from the combustion of waste of the fuel cell system;
(b) an evaporator or heat exchanger vaporizing the process water by means of cooling the fumes from the combustion of waste of the fuel cell system; and
(c) a superheater wherein the ethanol and the water are mixed and superheated as a step prior to the entrance in the pre-reformer.

12. A method for reforming ethanol comprising:
- a pre-reforming stage in which the ethanol is catalytically transformed into methane, hydrogen, carbon monoxide and carbon dioxide;
- a subsequent reforming stage in which the methane contained in the pre-reformed gas stream obtained in the pre-reforming stage is catalytically converted into hydrogen.
wherein said stages are carried out by using an ethanol reforming system as defined in any of claims 1 to 4.

13. The method according to claim 12, further comprising a purification stage for reducing the carbon monoxide contained in the reformed gas stream obtained after the achievement of the stages defined in said claim 12, which comprises:
- a gas-water shift reaction performed in the WGS reactor, in which part of the carbon monoxide contained in the reformed stream catalytically reacts with the water contained in the same stream forming carbon dioxide and hydrogen;
and at least one reaction from:
- a preferential oxidation reaction of carbon monoxide with oxygen performed in the COPROx reactor, and
- a selective methanation reaction of carbon monoxide in the presence of a catalyst.

14. An electric energy generating system comprising a fuel cell and an ethanol processing system as defined in any of claims 1 to 11.

15. A motor vehicle propelled by an energy generating system comprising a fuel cell and an ethanol processing system as defined in any of claims 1 to 11.
